# EUROPEAN PATENT SPECIFICATION

(11) **EP 4 260 235 B1**
(45) Date of publication and mention of the grant of the patent: **10.06.2026**
(21) Application number: 21839669.5
(22) Date of filing: 10.12.2021
(51) Int. Cl.: G06K 19/077, B29C 70/68, B29C 70/70, B29D 30/00, B60C 19/00

(54) **RUBBER-COATING OF ELECTRONIC COMPONENTS**
GUMMIBESCHICHTUNG VON ELEKTRONISCHEN BAUTEILEN
REVÊTEMENT À BASE DE CAOUTCHOUC DE COMPOSANTS ÉLECTRONIQUES

(30) Priority: 14.12.2020 IT 202000030686
(43) Date of publication of application: 18.10.2023
(73) Proprietor: Pirelli Tyre S.p.A., 20126 Milano (IT)
(72) Inventor: DE COL, Christian, 23807 Merate (Lecco) (IT); PORTINARI, Gianni Enrico, 20126 Milano (IT); BOFFA, Vincenzo, 20900 Monza (MB) (IT); MERVIC, Stefano Rosario, 20126 Milano (IT); TRABATTONI, Andrea, 20831 Seregno (MB) (IT)
(74) Representative: Porta & Consulenti Associati S.p.A.
(86) International application number: PCT/IB2021/061552
(87) International publication number: WO 2022/130144

(56) References cited:
- EP-A2- 2 172 878
- EP-B1- 2 172 878
- WO-A1-2020/225668
- US-A1- 2019 039 341
- US-A1- 2020 110 978

## Description

The invention relates to a method for rubber-coating electronic components as well as an apparatus for producing rubber-coated electronic components.

In an application of the invention, the rubber-coated electronic components are intended for being used in tyres for vehicle wheels.

A tyre for vehicle wheels typically comprises a carcass structure, shaped according to a substantially toroidal configuration, comprising at least one carcass ply having axially opposite ends. The latter are engaged to respective annular anchoring structures, each of them normally formed by at least one substantially circumferential annular insert called "bead core" on which at least one filling insert is generally applied, tapering radially away from the rotation axis. The annular anchoring structures are located in areas usually identified as "beads". The beads have an inner diameter substantially corresponding to a so-called "fitting diameter" of the tyre on a respective mounting rim.

The tyre also comprises a crown structure comprising at least one belt strip located in a radially outer position with respect to the carcass ply and a tread band that is radially outer with respect to the belt strip. Longitudinal and transverse grooves are typically shaped on the tread band, arranged to define a desired tread pattern. A so-called 'under-layer' made of elastomeric material of suitable properties for obtaining a stable union between the belt strip(s) and the tread band can be arranged between the tread band and the belt strip(s).

The tyre also comprises a pair of so-called sidewalls made of elastomeric material that represent the axially outer surfaces of the tyre, with respect to a mid-plane perpendicular to the rotation axis of the tyre. For example, the sidewalls represent the axially outer surfaces with respect to the annular anchoring structures, the carcass ply(-ies), the belt strip(s) and possibly at least a portion of tread band.

In "tubeless" tyres, there is at least one layer of elastomeric material, usually called "liner", in radially inner position with respect to the carcass ply, which is airtight and generally extends from one bead to the other.

The term "elastomeric material" is meant to indicate a composition comprising at least one elastomeric polymer and at least one reinforcing filler. Such a composition can also comprise additives like, for example, a cross-linking agent and/or a plasticizer. Thanks to the presence of the cross-linking agent, such a material can be cross-linked through heating, so as to form the end product.

The term "element of elastomeric material cut to size" is meant to indicate a manufactured product having specific shape and size with respect to an intended use of the element, obtained through cutting from a starting elastomeric material having generic shape and size with respect to the intended use. Preferably, the starting elastomeric material is a tape of elastomeric material. The element of elastomeric material cut to size preferably has a profile in cross section having a flat configuration that can be oval, circular, quadrangular, preferably square or rectangular in shape.

The term "tape" is meant to indicate a continuous elongated element that extends along a longitudinal direction and having a profile, in cross section, with a generally flat configuration.

The term "rubber coating" referring to an electronic component is meant to indicate an operation in which the electronic component is covered with elastomeric material so as to make a rubber-coated electronic component, that is entirely covered with elastomeric material, i.e. incorporated in it.

The term "rubber-coated electronic component" is meant to indicate the electronic component covered with elastomeric material, as obtained from the rubber-coating.

The term "advancing direction" referring to a tape of material is meant to indicate a direction of movement parallel to a longitudinal direction of the tape of material.

The terms "downstream" and "upstream" refer to the aforementioned advancing direction. Therefore, hypothesizing for example an advancing direction from left to right, a "downstream" position with respect to any reference element indicates a position to the right of said reference element and an "upstream" position indicates a position to the left of said reference element.

The terms "below" and "above" with respect to the tape of material are meant to indicate a relative position with respect to a plane, typically horizontal, on which the flat configuration of the tape of material develops and on which the longitudinal direction of the tape extends.

The term "production cycle time" is meant to indicate the time that elapses between the exit of one rubber-coated electronic component from a production process or apparatus and the exit of the next rubber-coated electronic component, in steady-state operating conditions.

WO 2010/007283 describes a method for producing at least one tyre element, intended to be incorporated in a tyre or applied on the surface thereof, comprising at least one electronic component (for example an RFIDtag) coated with rubber. The electronic component is brought into contact with a first strip of rubber and is covered by a second strip of rubber so as to coat the component. The two strips move substantially at the same speed from a first area in which they are separated to a second area in which two respective faces of the two strips are in contact with each other. The two strips are simultaneously cut transversally after the electronic component has been coated.

US 2019/0039341 and US 2020/0110978 disclose a rubberized RFID tag to be incorporated in a tyre. Production apparatuses and processes of RFID tags coated with rubber are also described by CN 201483852, CN 107973163, CN 204198092, WO 2020/225668 and EP 2172878.

With respect to the aforementioned solutions, the Applicant has perceived the need to improve the production of rubber-coated electronic components, in particular in terms of precision of assembly and of production cycle time, while containing the costs and space occupied of the necessary apparatuses.

The Applicant has in particular felt the need to improve the precision of positioning of the electronic component inside the coating elastomeric material so as to obtain, on the one hand, improved quality of the rubber-coated electronic components obtained and, on the other hand, a reduction of waste of defective rubber-coated electronic components due to incorrect positioning of the electronic component inside the coating elastomeric material.

The Applicant has perceived that the aforementioned needs can be satisfied through a suitable provision of the elastomeric material used to coat the electronic components.

The Applicant has finally found that the aforementioned needs can be satisfied through the provision of elements of elastomeric material cut to size within which to enclose the electronic components.

In accordance with a first aspect thereof, the invention relates to a method for rubber-coating electronic components according to claim 1.

In accordance with a second aspect thereof, the invention relates to an apparatus according to claim 9.

The Applicant deems that the provision of elements of elastomeric material cut to size in which to enclose the electronic components makes it possible to carry out the positioning of each electronic component between elements of elastomeric material that are already cut to size. In this way, it is possible, on the one hand, to correct possible cutting errors in the elements of elastomeric material cut to size by compensating with suitable positioning of the electronic components that takes into account such errors and, on the other hand, to reduce waste of resources by avoiding positioning the electronic components on elements of elastomeric material cut to size that have irreparable cutting errors which are, therefore, discarded.

The provision of elements of elastomeric material cut to size also makes it possible to obtain such elements from a single tape of elastomeric material so as to reduce costs and production space occupied and to simplify the layout of the production apparatus.

The production of rubber-coated electronic components carried out as described above also makes it possible to obtain a short production cycle time, for example comprised between 3s and 4s.

Overall, the objects outlined above of improving the precision of assembly, of reducing waste of defective rubber-coated electronic components and of waste of resources, of keeping the production cycle time short and decreasing costs and production spaces occupied are thus achieved.

The present invention in at least one of the aforementioned aspects can have at least one of the following preferred characteristics.

Preferably, it is provided to provide a single tape of said elastomeric material.

Preferably, the tape of said elastomeric material is wound on a reel.

Preferably, it is provided to cut said single tape so as to obtain said elements of elastomeric material cut to size.

More preferably, said elements of elastomeric material are obtained through transversal cutting of the single tape of said elastomeric material.

Preferably, the elements of elastomeric material cut to size have a rectangular shape.

Preferably, the electronic components comprise RFID TAGs.

Preferably, before enclosing each electronic component between the respective first element and second element, a control is carried out that is adapted to verify that the respective first element and second element have shape and size falling within predetermined reference values.

Preferably, if the size and/or shape does not fall within the predetermined reference values, an error signal is emitted.

Preferably, if the size and/or shape does not fall within the predetermined reference values, the respective first element and second element are discarded.

Preferably, if the size and shape do fall within the predetermined reference values, the respective first element and second element are kept.

Preferably, before enclosing each electronic component between the respective first element and second element, it is provided to carry out a first electronic component control adapted for verifying correct operation of each electronic component according to predetermined specifications.

Preferably, if in the first control the predetermined specifications are not met, an error signal is emitted.

Preferably, if in the first control the predetermined specifications are not met, the electronic component is discarded without being enclosed between the respective first element and second element.

Preferably, the first electronic component control is carried out by verifying the correct operation of a transceiver device of the electronic component.

Preferably, a second electronic component control is adapted to verify correct operation of each electronic component according to predetermined specifications, after having enclosed the electronic component between the respective first element and second element. This advantageously makes it possible to control that the electronic component has not become damaged either during its positioning or during its covering with the respective second element.

Preferably, if in the second control the predetermined specifications are not met, an error signal is emitted.

Preferably, if in the second control the predetermined specifications are not met, the electronic component enclosed between the respective first element and second element is discarded.

Said first elements of said elements of elastomeric material cut to size are deposited, one after the other, on a tape of service material.

The electronic components are positioned, one after the other, on the respective first elements, after their deposition on the tape of service material.

The second elements of said elements of elastomeric material cut to size are laid, one after the other, over the respective first elements so as to cover the respective electronic components positioned on them.

Preferably, the second electronic component control is carried out through a control device positioned below the tape of service material.

Preferably, the control device has a narrow reading field so as to avoid the reading of the adjacent rubber-coated electronic components. Suitable shielding preferably helps to contain the radiofrequency signals.

Preferably, the second electronic component control is carried out by verifying the correct operation of a transceiver device of the electronic component.

Preferably, the second electronic component control is carried out through a transceiver device positioned below the tape of service material.

Preferably, said elements of elastomeric material cut to size are provided in pairs, each pair comprising a respective first element of said first elements and a respective second element of said second elements.

Preferably, the deposition over the tape of service material of said first elements and second elements is carried out by depositing said pairs one after the other, over the tape of service material.

Preferably, the first element of each current pair of said pairs, currently laid over the tape of service material, is laid directly on the tape of service material whereas the second element of each current pair is laid over the first element of a previous pair of said pairs, previously laid over the tape of service material. In this way, each electronic component is enclosed between the first element of a previous pair and the second element of a current pair.

Preferably, before the positioning of each electronic component on the respective first element, the positioning of the respective first element on the tape of service material is checked.

Preferably, the positioning of each electronic component on the respective first element is carried out by taking into account the result of said positioning check of the respective first element.

Preferably, the laying of each second element over the respective first element is carried out by taking into account the result of said positioning check of the respective first element.

Preferably, after the positioning on the first element of the respective electronic component, the positioning of the electronic component on said first element is checked.

Preferably, if the positioning of the electronic component on said first element is outside of predetermined reference values, an error signal is emitted.

Preferably, if the positioning of the electronic component on said first element is outside of the predetermined reference values, the electronic component is removed from the tape of service material.

Preferably, if the positioning of the electronic component on said first element falls within the predetermined reference values, the electronic component is kept over the tape of service material.

According to an embodiment, in an initial phase of the process, before laying the pairs of said elements of elastomeric material one after the other over the tape of service material, a single element of elastomeric material cut to size, on which a respective electronic component is positioned, is laid on the tape of service material and, at the subsequent laying of the first pair of said pairs, the second element of such a first pair is laid over said single element of elastomeric material so as to cover the respective electronic component previously positioned on said single element of elastomeric material.

Preferably, in said initial phase of the process, said single element of elastomeric material cut to size is obtained from the single tape of said elastomeric material.

According to another embodiment, in an initial phase of the process, the second element of a first pair laid over the tape of service material is laid directly on the tape of service material. In other words, without covering any electronic component, not having any first element of a previously-laid pair available.

Preferably, it is provided to make the tape of service material advance along a respective advancing direction. More preferably, it is provided to make the tape of service material advance step-by-step along the respective advancing direction.

Preferably, it is provided to lay the pairs of elements of elastomeric material one after the other and to position the electronic components one after the other on the respective first elements of each pair at a laying area along the advancing direction of the tape of service material.

Preferably, the laying area comprises a first position and a second position downstream of the first position along the advancing direction of the tape of service material. The first position is preferably adapted for depositing the first element of each pair whereas the second position is preferably adapted for positioning the electronic component and depositing the second element of each pair for the formation of the rubber-coated electronic component.

Preferably, at every advancing step of the tape of service material, the rubber-coated electronic component formed in the previous step at the second position comes out from the deposition area while the first element laid at the previous step, at the first position, advances into the second position where the respective electronic component is positioned. After this, still in the same advancing step of the tape of service material, the first element and the second element of a further pair of said elements of elastomeric material are respectively laid at the first position and the second position.

Preferably, as the second elements are progressively laid over the respective first elements, the tape of service material containing the electronic components enclosed by the respective first elements and second elements is wound to form a reel of rubber-coated electronic components.

Preferably, a third working line is provided that is configured to feed a tape of service material, wherein said first elements and said second elements enclose said electronic components over said tape of service material.

Preferably, the first moving device is configured to pick up said first elements, one after the other, from the first working line and lay them, one after the other, on the tape of service material.

Preferably, the second moving device is configured to pick up the electronic components from the second working line, one after the other, and, respectively, position them, one after the other, on said first elements laid on the tape of service material.

Preferably, the first moving device is configured to pick up said second elements, one after the other, from the first working line and, respectively, lay them, one after the other, over said first elements so as to cover the respective electronic components positioned on them by the second moving device.

Preferably, the third working line comprises an image acquisition device adapted to verify the positioning on said tape of service material of each element of said first elements of said elements of elastomeric material cut to size.

Preferably, the service material is transparent.

Preferably, the image acquisition device is arranged under the tape of service material.

Preferably, the image acquisition device is adapted for illuminating said tape of service material from below.

Preferably, a further image acquisition device is provided that is adapted for verifying the positioning of each electronic component after it has been positioned on the respective first element.

Preferably, the third working line comprises a deposition area in which the first elements and the second elements of said elements of elastomeric material cut to size are laid over the tape of service material.

Preferably, said image acquisition device is arranged at said deposition area.

Preferably, the third working line comprises a control device adapted to control a correct operation, according to predetermined specifications, of each electronic component positioned on the respective first element.

Preferably, said control device is arranged under the tape of service material.

Preferably, said control device is positioned downstream of said image acquisition device with respect to an advancing direction of the tape of service material.

Preferably, said control device is positioned in a control area arranged downstream of said deposition area with respect to an advancing direction of the tape of service material.

Preferably, the control device comprises a transceiver device.

Preferably, the apparatus comprises a further control device adapted for controlling the correct operation of each electronic component before the positioning thereof on the respective first element.

Preferably, the second moving device is configured to make each electronic component pass at said further control device after having picked it up from the second working line and before positioning it on the respective first element.

Preferably, the third working line comprises a reel of said tape of service material.

Preferably, the third working line comprises an unwinding mechanism of the reel of said tape of service material.

Preferably, the third working line is configured to make the tape of service material advance along a respective advancing direction.

Preferably, the third working line comprises a step-by-step advancing mechanism to make the tape of service material advance along said respective advancing direction.

Preferably, the third working line comprises a spooling station in which, as the second elements are progressively laid over the respective first elements, the tape of service material containing the electronic components enclosed by the respective first elements and second elements is wound to form a reel of rubber-coated electronic components.

Preferably, at least one from the first moving device and the second feeding device comprises an anthropomorphic robot.

Preferably, the anthropomorphic robot has a robotized arm having at least 4 axes.

Preferably, the first working line comprises a single tape of said elastomeric material.

Preferably, the single tape of said elastomeric material is wound on a reel.

Preferably, the first working line comprises a cutting unit configured to cut said single tape of said elastomeric material so as to obtain said elements of elastomeric material cut to size.

Preferably, the first working line comprises a feeding mechanism adapted for feeding the tape of elastomeric material along a respective advancing direction, preferably according to discrete steps.

Preferably, the first working line comprises a parking station adapted for parking the first elements and the second elements and for being picked up by the first moving device.

Preferably, the parking station comprises a measuring device adapted for checking that the shape and size of the first elements and of the second elements fall within predetermined reference values.

Preferably, the first working line is configured to feed said elements of elastomeric material cut to size by feeding pairs of said elements of elastomeric material cut to size one after the other, each pair comprising a respective first element of said first elements and a respective second element of said second elements.

Preferably, the first moving device is configured to carry out the picking up from the first working line and the laying over the tape of service material of said first elements and second elements by picking up and laying said pairs of said elements of elastomeric material cut to size one after the other.

Preferably, the first moving device is configured to lay the first element of each current pair of said pairs, currently laid over the tape of service material directly on the tape of service material, and to lay the second element of each current pair over the first element of a previous pair of said pairs, previously laid over the tape of service material.

Preferably, the first working line comprises a manipulator adapted for picking up the pairs of elements of elastomeric material cut to size, one after the other, as they are made by the cutting unit, and for transferring them into the parking station.

Preferably, the second working line comprises a continuous elongated blister, comprising containing seats of the electronic components.

Preferably, the continuous elongated blister is wound in a reel.

Preferably, the second working line comprises a feeding mechanism of said blister along a respective advancing direction.

Preferably, the feeding mechanism of said blister is adapted for feeding the blister along the respective advancing direction according to discrete steps, preferably corresponding to a step of spacing of the containing seats of the electronic components of the blister.

Preferably, the second working line comprises a pick-up point adapted for the picking up of the electronic components by the second moving device as said blister is made to advance along the respective advancing direction.

Further characteristics and advantages of the present invention will become clear from the following detailed description of some embodiments thereof, provided only as non-limiting examples, said description being made with reference to the attached drawings, in which:
- figure 1 schematically shows an apparatus for producing rubber-coated electronic components according to an embodiment of the invention;
- figure 2 schematically shows an example of a rubber-coated electronic component that can be produced according to the invention;
- figure 3 schematically shows an exploded view of the rubber-coated electronic component of figure 2;
- figures 4a-4e schematically show an example of a deposition flow of first and second elements of elastomeric material cut to size and of electronic components in a deposition area of the apparatus of figure 1.

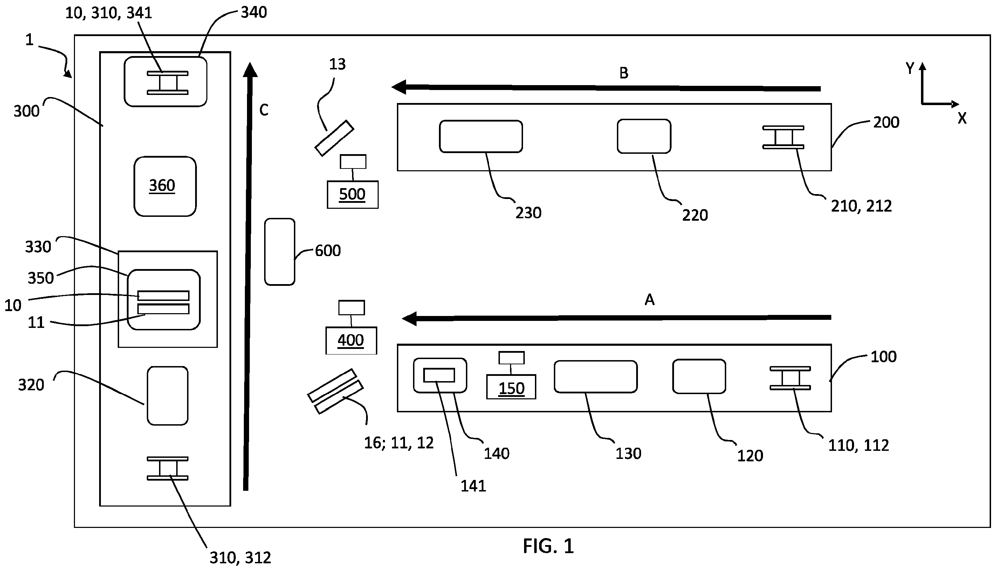

Figure 1 shows an apparatus 1 for producing rubber-coated electronic components 10 according to an embodiment of the invention comprising a first working line 100, a second working line 200 and a third working line 300.

In the illustrated example, in a plane XY, the first working line 100 and the second working line 200 extend along two directions A, B substantially parallel to one another and parallel to an axis X whereas the third working line 300 extends along a direction C parallel to an axis Y and perpendicular to the two directions A, B. However, other configurations are possible.

According to the invention, the rubber-coated electronic components 10 are formed from electronic components 13 to be rubber-coated and from elements of elastomeric material cut to size, by sandwiching the electronic components 13 between respective first elements 11 and second elements 12 of said elements of elastomeric material cut to size.

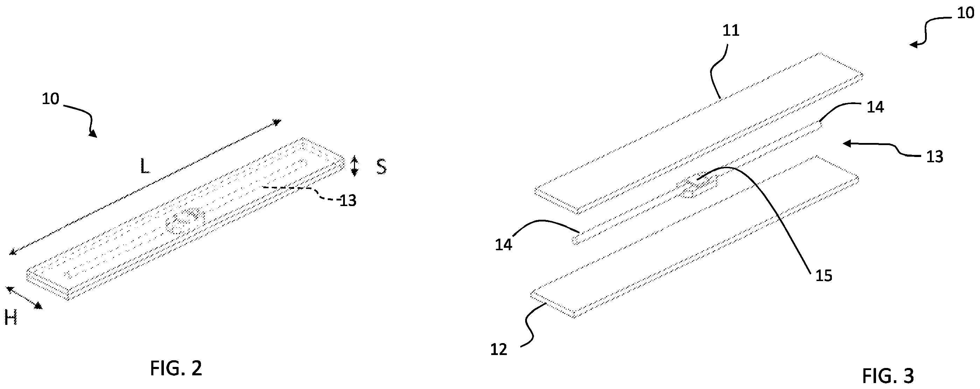

Figures 2 and 3 show an example of a rubber-coated electronic component 10 that can be produced according to the invention.

The rubber-coated electronic component 10 comprises a first element 11 of elastomeric material cut to size, a second element 12 of elastomeric material cut to size and an electronic component 13.

The first element 11 of elastomeric material cut to size and the second element 12 of elastomeric material cut to size are the same.

In the example, the first element 11 of elastomeric material cut to size and the second element 12 of elastomeric material cut to size have a rectangular shape. In the example, the electronic component 13 is an RFID tag comprising an integrated circuit 15 and two antennae 14. However, other types of electronic components can be used.

In the example, the rubber-coated electronic component 10 has a rectangular shape and can have the following dimensions: width H comprised between 6 mm and 18 mm, length L comprised between 50 mm and 110 mm and thickness S comprised between 0.8 mm and 2 mm.

In an embodiment of the invention, the rubber-coated electronic component 10 is intended to be used in a tyre for vehicle wheels. However, other applications are possible.

The first working line 100 is configured to feed the elements of elastomeric material cut to size 11, 12 that will form, together with the respective electronic components 13, the rubber-coated electronic components 10.

In turn, the second working line 200 is configured to feed the electronic components 13.

The third working line 300 is configured to feed a tape of service material 310 on which to form the rubber-coated electronic components 10 from the elements of elastomeric material cut to size and from the electronic components 13, respectively fed by the first working line 100 and by the second working line 200.

The apparatus 1 also comprises a first moving device 400 and a second moving device 500.

The first moving device 400 is configured to pick up first elements 11 of said elements of elastomeric material cut to size, one after the other, from the first working line 100 and lay them, one after the other, on the tape of service material 310.

The second moving device 500 is configured to pick up the electronic components 13 from the second working line 200, one after the other, and, respectively, position them, one after the other, on said first elements 11 laid on the tape of service material 310.

The first moving device 400 is configured to pick up second elements 12 of said elements of elastomeric material cut to size, one after the other, from the first working line 100 and respectively, position them, one after the other, on said first elements 11 so as to cover the respective electronic components 13 positioned on them by the secondo moving device 500.

The first elements 11 and the second elements 12 are equal elements of said elements of elastomeric material cut to size. The term "first elements" 11 is used to indicate the elements, of said elements of elastomeric material cut to size, which are directly positioned on the tape of service material 310 whereas the term "second elements" is used to indicate the elements, of said elements of elastomeric material cut to size, which are positioned on the first elements 11 so as to cover the respective electronic components 13.

In a preferred embodiment illustrated in figure 1, the first working line 100 is configured to feed the elements of elastomeric material cut to size by feeding pairs 16 of elements of elastomeric material cut to size one after the other, wherein each pair 16 comprises a respective first element 11 and a respective second element 12.

The first moving device 400 is preferably configured to carry out the picking up from the first working line 100 and the laying over the tape of service material 310 of said first elements 11 and second elements 12 by picking up and laying said pairs 16 of said elements of elastomeric material cut to size one after the other.

Preferably, the first moving device 400 is configured to lay the first element 11 of each current pair 16 (in other words, currently laid on the tape of service material 310) directly on the tape of service material 310, and to lay the second element 12 of each current pair 16 over the first element 11 of a previous pair 16 (in other words, previously laid on the tape of service material 310).

The second moving device 500 is configured to pick up the electronic components 13 from the second working line 200, one after the other, e lay them, one after the other, on the first element 11 of each pair 16 just laid over the tape of service material 310.

Each electronic component 13 is therefore enclosed between the first element 11 of a previous pair and the second element 12 of a current pair.

In the preferred embodiment illustrated in figure 1, the first element 11 and the second element 12 of each pair 16 are manipulated simultaneously by the first moving device 400, which is preferably equipped with two independent gripping devices. In particular, the first element 11 and the second element 12 of each pair 16 are picked up (from the first working line 100) and laid (over the tape of service material 310) simultaneously by the first moving device 400.

Preferably, the first moving device 400 and the second feeding device 500 each comprise an anthropomorphic robot.

Preferably, the anthropomorphic robot has a robotized arm having at least 4 axes.

Basically, according to a preferred embodiment of the invention, the rubber-coated electronic components 13 are produced by laying the pairs 16 of elements of elastomeric material over the tape of service material 310 one after the other, and by taking steps to deposit the first element 11 of each current pair 16 directly on the tape of service material 310 and the second element 12 of each current pair 16 over the first element 11 of the previous pair 16, so as to cover the respective electronic component 13 previously positioned on it.

Therefore, whereas the second element 12 of each pair 16 is adapted for covering the electronic component 13, the first element 11 is adapted for being laid directly on the tape of service material 310 in preparation for a new rubber-coated electronic component 10.

The first moving device 400 and the second moving device 500 are configured to provide a flow of continuous movements in which the first moving device 400 passes, with a predetermined cadence, from a pick-up position in which it picks up the current pair 16 from the first working line 100 to a laying position in which it lays the current pair 16 over the tape of service material 310, and vice-versa. On the other hand, the second moving device 500 passes, with a predetermined cadence, synchronized with the first moving device 400, from a pick-up position in which it picks up the current electronic component 13 from the second working line 200 to a laying position in which it lays the current electronic component 13 on the first element 11 of the pair 16 just laid over the tape of service material 310, and vice-versa. The first moving device 400 and the second moving device 500 are suitably synchronized so that, while the first moving device 400 is in the pick-up position, the second moving device 500 is in the laying position and, while the first moving device 400 is in the laying position, the second moving device 500 is in the pick-up position.

The first working line 100 comprises a single tape 110 of elastomeric material wound in a reel 112.

The first working line 100 comprises a feeding mechanism 120 adapted for unwinding the reel 112 and for feeding the tape 110 of elastomeric material on a horizontal plane (parallel to the plane XY), along the advancing direction A, according to discrete steps, for example of 20mm.

Along the advancing direction A, downstream of the reel 112, the first working line 100 also comprises a cutting unit 130 configured to cut the single tape 110 of elastomeric material transversally while it advances along the advancing direction A, so as to obtain elements of elastomeric material cut to size with a rectangular shape.

The unwinding mechanism 120 is adapted for feeding the tape 110 of elastomeric material to the cutting unit 130, after having removed a protective material adapted for covering and protecting the elastomeric material while it is wound in the reel 112, and for keeping it suitably tensioned. The protective material can for example be polyethylene.

The tape 110 of elastomeric material, after having been separated from the protective material, therefore enters into the cutting unit 130 advancing along the advancing direction A in discrete steps.

The protective material is then recovered, for example by winding it into a recovery reel (not illustrated).

In the preferred embodiment illustrated in figure 1, the cutting unit 130 is equipped with two blades having a pitch, for example, of 10 mm, adapted for cutting the tape 110 of elastomeric material transversally, as it advances along the advancing direction A, so as to form the pairs 16 of elements of elastomeric material cut to size, each comprising a respective first element 11 and a respective second element 12.

The rectangular elements thus obtained (corresponding in length L and width H to said rubber-coated electronic elements 10) have thickness s and length L respectively corresponding to the thickness and the transversal size of the tape 110 of elastomeric material and width H corresponding to the pitch of the cutting blades (for example respectively equal to 0.5 mm, 70 mm and 10 mm).

Along the advancing direction A, downstream of the cutting unit 130, the first working line 100 also comprises a parking station 140 and a manipulator 150 (for example equipped with a linear motor).

As the pairs 16 of elements of elastomeric material cut to size are formed, the manipulator 150 picks them up, one after the other, from the cutting unit 130 and lays them on a support surface of the parking station 140 from which they are then picked up, one after the other, by the first moving device 400.

The parking station 140 comprises a measuring device 141 adapted for checking that the shape and size of the first element 11 and of the second element 12 of each pair 16 laid on the support surface fall within predetermined reference values. For example, the measuring device can be an image acquisition device.

If at least one from shape and size does not fall within the predetermined reference values, it can be provided to emit an error signal.

Preferably, if at least one from shape and size does not fall within the predetermined reference values, the first element 11 and the second element 12 of the pair 16 are discarded.

If the shape and size do fall within the predetermined reference values, the two elements 11, 12 of the pair 16 are picked up from the parking station 140 by the first moving device 400 and regularly laid over the tape of service material 310.

The second working line 200 comprises a continuous elongated blister 210, comprising containing seats containing the electronic components 13.

The containing seats of the blister 210 are spaced with a fixed pitch and are covered by a covering film, preferably transparent.

The blister 210 is wound in a reel 212.

The second working line 200 also comprises a feeding mechanism 220 (managed for example by an electric actuator) of said blister 210 that is adapted for unwinding the reel 212 and for feeding, on a horizontal plane (parallel to the plane XY), the blister 210 unwound along the advancing direction B according to discrete steps, corresponding to the spacing pitch of the containing seats for the electronic components 13 of the blister 210.

Along the advancing direction B, downstream of the reel 212, the second working line 200 comprises a pick-up point 230 in which the electronic components 13 are picked up, one after the other, by the second moving device 500, from the respective containing seats of the blister 210 as the feeding mechanism 220 feeds the blister 210 to such a pick-up point 230, along the advancing direction B.

The feeding mechanism 220 is adapted for feeding the blister 210 to the pick-up point 230, after having removed the covering film.

The covering film is recovered, for example wound in a recovery reel (not illustrated). The blister 210 is also recovered (for example in a recovery box) as in the pick-up point 230 the electronic components 13 are picked up, one after the other, from the respective containing seats.

Once picked up from the pick-up point 230, the electronic components 13 are laid, one after the other, by the second moving device 500, on the first element 11 of each pair 16 just laid over the tape of service material 310.

In the embodiment shown in figure 1, the apparatus 1 comprises a first control device 600 adapted for carrying out a first control of a correct operation of each electronic component 13 according to predetermined specifications, before the positioning thereof on the respective first element 11.

The second moving device 500 is therefore configured to make each electronic component 13 pass at said first control device 600 after having picked it up from the pick-up point 230 of the second working line 200 and before positioning it on the respective first element 11.

If the aforementioned predetermined specifications are not met, an error signal is emitted. Preferably, if in such a first control the predetermined specifications are not met, the electronic component 13 is discarded (for example by laying it in a suitable recovery box, not illustrated) without being positioned on the respective first element 11.

On the other hand, if the predetermined specifications are met, the electronic component 13 is regularly laid on the respective first element 11.

When the electronic component is an RFID tag, the first control device 600 preferably comprises a RF transceiver device adapted for controlling the correct operation of a RF transceiver device of the RFID tag.

Thee third working line 300 comprises the tape of service material 310, wound in a reel 312.

Preferably, the service material is transparent. More preferably, polyethylene terephthalate (PET) is used as service material.

The third working line 300 comprises a feeding mechanism 320 that is adapted for unwinding the reel 312 and for feeding the tape of service material 310 along the advancing direction C. Preferably, the feeding mechanism 320 is adapted for making the tape of service material 310 advance step-by-step on a horizontal plane (parallel to the plane XY) along the advancing direction C. Preferably, the advancing pitch is equal to the distance between centers (for example 25mm) of the first element 11 and of the second element 12 laid over the tape of service material 310.

Along the advancing direction C, downstream of the reel 312, the third working line 300 comprises a deposition area 330 for the deposition, by the first moving device 400 and the second moving device 500, of the pairs 16 of elements of elastomeric material cut to size and of the respective electronic components 13, which are laid over respective portions of the tape of service material 310 that transit through said deposition area 330, while the tape of service material 310 advances along the advancing direction C.

In the illustrated embodiment in which the elements of elastomeric material cut to size have a rectangular shape, the first element 11 and the second element 12 of each pair 16 are preferably laid over the tape of service material 310 transversally to the advancing direction C, in other words with the length dimension L perpendicular to the advancing direction C.

The deposition area 330 represents, along the advancing direction C, a "sandwich" area where the rubber-coated component 10 is made, formed by the electronic component 13 enclosed by the respective first element 11 and by the respective second element 12 of said elements of elastomeric material cut to size.

Along the advancing direction C, downstream of the deposition area 330 in which the rubber-coated electronic components 10 have been formed, the third working line 300 also comprises a spooling station 340 in which the tape of service material 310 is wound to form a reel 341 for collecting rubber-coated electronic components 10.

The third working line 300 also comprises an image acquisition device 350 adapted for checking the positioning of the first element 11 of each pair 16 after it has been laid on the tape of service material 310 and before the positioning, on it, of the respective electronic component 13.

Preferably, the image acquisition device 350 is operatively connected to the second moving device 500 so that the positioning on the first element 11 of each pair 16 of the respective electronic component 13 is carried out by the second moving device 500 taking into account the result of said check.

Preferably, the image acquisition device 350 is arranged under the transparent tape of service material 310, at the deposition area 330.

Preferably, the image acquisition device 350 is adapted for illuminating said tape of service material 310 from below, at the deposition area 330.

Preferably, the image acquisition device 350 is also operatively connected to the first moving device 400 so that the deposition of the second element 12 on the respective electronic component 13 is carried out taking into account the result of said positioning check of said first element 11.

Preferably, a further image acquisition device is provided above said tape of service material 310 (not illustrated) adapted for checking the positioning of each electronic component 13 after it has been positioned on the respective first element 11 of each pair 16.

If the positioning of the electronic component 13 on said first element 11 is outside of predetermined reference values, an error signal is emitted.

Preferably, if the positioning of the electronic component 13 on said first element 11 is outside of the predetermined reference values, the electronic component is removed from the tape of service material 310 together with the respective first element 11.

On the other hand, if the positioning of the electronic component 13 on said first element 11 falls within the predetermined reference values, the electronic component 13 is regularly kept on said first element 11.

The third working line 300 also comprises a second control device 360 adapted for carrying out a second control to control the correct operation, according to predetermined specifications, of each electronic component 13 after the respective rubber-coated electronic component 10 has been formed. This advantageously makes it possible to check that the electronic component 13 has not been damaged during the "sandwiching" operation in the deposition area 330.

If in the second control the predetermined specifications are not met, an error signal is emitted.

Preferably, if in the second control the predetermined specifications are not met the rubber-coated electronic component 10 comprising such an electronic component 13 is removed from the tape of service material 310.

On the other hand, if in the second control the predetermined specifications are met, the rubber-coated electronic component 10 comprising such an electronic component 13 is regularly kept on the tape of service material 310.

Preferably, said second control device 360 is arranged under the tape of service material 310.

Preferably, said second control device 360 is arranged downstream of said deposition area 330.

When the electronic component 13 is an RFID tag, the second control device 360 preferably comprises a RF transceiver device adapted for controlling the correct operation of the RF transceiver device of the RFID tag.

According to the preferred embodiment illustrated in figure 1, the production of rubber-coated electronic components 10 is therefore carried out through:
- obtaining pairs 16 of elements of elastomeric material cut to size, in which each pair 16 comprises a first element 11 and a second element 12;
- deposition, one after the other, of the pairs 16 of elements of elastomeric material over the tape of service material 310;
- positioning, on the first element 11 of each pair 16 laid over the tape of service material 310, of a respective electronic component 13;
in which the deposition of the pairs 16 of elements of elastomeric material one after the other is carried out by depositing the first element 11 of each current pair 16 directly on the tape of service material 310 and the second element 12 of each current pair 16 over the first element 11 of the previous pair 16, so as to cover the respective electronic component 13 previously positioned on it.

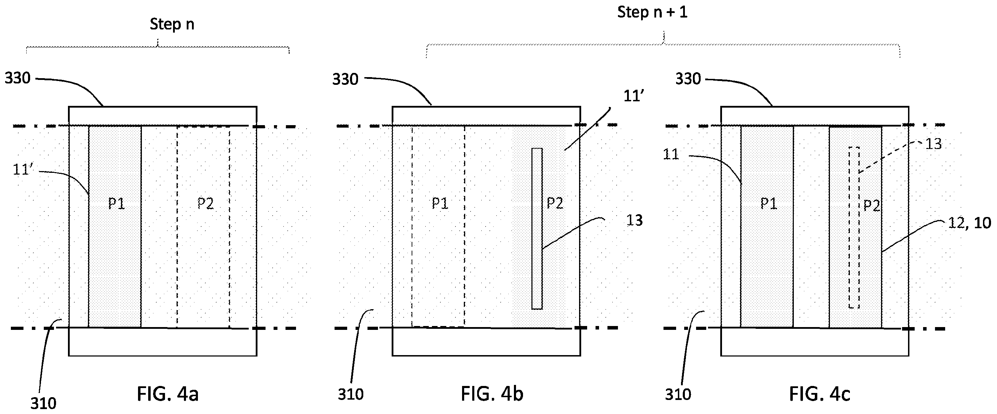

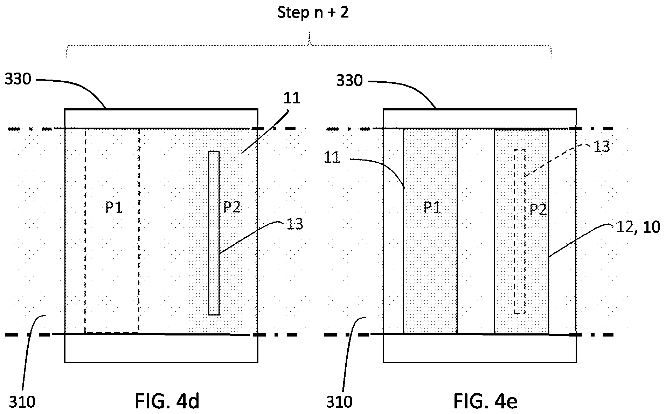

As schematically illustrated in figure 4, the deposition area 330 comprises a first position P1 and a second position P2 downstream of the first position P1.

The first position P1 corresponds to the depositing position of the first element 11 of each pair 16 by the first feeding device 400 whereas the second position P2 corresponds to the depositing position of the second element 12 of each pair 16 by the first feeding device 400 as well as to the depositing position of the electronic component 13 by the second feeding device 500.

In an initial phase of the production process, the feeding mechanism 320 starts to unwind the reel 312 and to feed the tape of service material 310 step-by-step along the advancing direction C.

According to a first example implementing the invention, in the deposition area 330, at the position P1, a first single element 11' of elastomeric material cut to size is laid, at step n, on the tape of service material 310 (situation schematically shown in figure 4a).

This first deposition can be carried out manually or, preferably, by the first moving device 400. In this last preferred case, it is provided for the cutting unit 130 of the first working line 100 to be configured, in the initial phase of the process, to cut such a first single element 11' of elastomeric material to size from the tape of said elastomeric material 110 (instead of a pair 16 with a first element 11 and a second element 12).

When the tape of service material 310 advances by one step (step n+1) taking such a first single element 11' to the position P2, the respective electronic component 13 is positioned on it, through the second moving device 500 (situation schematically shown in figure 4b).

After this, again at step n+1 of the tape of service material 310, the first moving device 400 respectively lays, at the positions P1 and P2, the first element 11 and the second element 12 of a first pair 16 of elements of elastomeric material, laying the second element 12 of such a first pair on said single element 11' of elastomeric material so as to cover the respective electronic component 13 just positioned there, so as to form the first rubber-coated electronic component 10 in the position P2 (situation schematically shown in figure 4c). The first element 11 of such a first pair 16, on the other hand, is laid directly on the tape of service material 310 at the position P1.

At the subsequent advancing step of the tape of service material 310 (step n+2), the rubber-coated electronic component 10 formed in the previous step (n+1) comes out from the deposition area 330 while the first element 11 of the first pair 16 laid at step n+1 advances in the position P2 where the second moving device 500 positions the respective electronic component 13 there (situation schematically shown in figure 4d).

After this, again at step n+2 of the tape of service material 310, the first moving device 400 respectively lays, at the positions P1 and P2, the first element 11 and the second element 12 of a second pair 16 of elements of elastomeric material, so as to cover the respective electronic component 13 just positioned with the second element 12 of such a second pair. The second rubber-coated electronic component 10 is therefore formed in the position P2 (situation schematically shown in figure 4e) in which the respective electronic component 13 is enclosed by the first element 11 of the first pair 16 and by the second element 12 of the second pair 16. The first element 11 of the second pair 16, on the other hand, is laid directly on the tape of service material 310 at the position P1.

The subsequent steps n + x will follow the same logic as step n+2. In particular, at every advancing step of the tape of service material 310, the rubber-coated electronic component 10 formed in the previous step comes out from the deposition area 330 while the first element 11 of the previous pair (in other words laid at the previous step) advances into the position P2 where the second moving device 500 positions the respective electronic component 13 there. After this, again at the same step of the tape of service material 310, the first moving device 400 respectively lays, at the positions P1 and P2, the first element 11 and the second element 12 of a current pair 16 of elements of elastomeric material.

In a second example of implementation of the invention that is not illustrated, it is possible to provide, in the initial phase of the process, for the second element 12 of the first pair 16 which is laid over the tape of service material 310 to be laid directly on the tape of service material 310 without covering any electronic component, not having any first element of a previously laid pair available.

In particular, it can be provided, in step n, for the first moving device 400 to respectively lay, at the positions P1 and P2, the first element 11 and the second element 12 of the first pair 16 of elements of elastomeric material, laying both directly on the tape of service material 310.

At the subsequent advancing step of the tape of service material 310 (step n+1), the second element 12 of the first pair 16 will come out from the deposition area 330 while the first element 11 of the first pair advances into the position P2 where the second moving device 500 will position the respective electronic component 13 (going back to a situation similar to that illustrated in figure 4b). The aforementioned second element 12 that has come out from the deposition area 330, not contributing to forming any rubber-coated electronic component 10, can be discarded (for example removed from the tape of service material 310) at the second control carried out by the second control device 360. In any case, being the first element laid on the tape of service material 310 it will be easily identifiable in the collection reel 341 of rubber-coated electronic components 10.

After this, again at step n+1 of the tape of service material 310, the first moving device 400 respectively lays, at the positions P1 and P2, the first element 11 and the second element 12 of a second pair 16 of elements of elastomeric material, so as to cover, with the second element 12 of such a second pair, the respective electronic component 13 just positioned, and to form the first rubber-coated electronic component 10 in the position P2 (going back to a situation similar to that illustrated in figure 4c). The first element 11 of such a second pair 16, on the other hand, will be laid directly on the tape of service material 310 at the position P1.

At this point, the subsequent steps n + x will follow the same logic as the first example of implementation described above.

It should be observed that even if a preferred embodiment has been illustrated and described in detail in which the elements of elastomeric material cut to size are fed (by the first working line 100) and manipulated (by the first moving device 400) in pairs 16, the teachings of the present invention also apply to the case in which such elements are fed and manipulated singularly.

As will be clear from the present description, thanks to the presence in the parking station 140 of the measuring device 141, it is possible to check that the shape and size of the elements of elastomeric material 11, 12 cut to size obtained by the cutting unit 130 fall within predetermined reference values. This advantageously makes it possible to identify possible cutting errors and possibly discard elements that do not meet the predetermined reference values.

Thanks to the presence of the first control device 600 it is possible to identify and possibly discard a malfunctioning electronic component before it is enclosed by the respective first and second element of elastomeric material. This advantageously makes it possible to prevent it from being needlessly used in the production process.

Moreover, thanks to the presence of the second control device 360 it is possible to check that the electronic component that has passed the control at the first control device 600 has not then been damaged during its positioning on the respective first element and/or during the covering with the respective second element.

Moreover, thanks to the presence of the image acquisition device 350, it is possible to control and finely adjust the positioning, on the first element of each pair, both of the respective electronic component and of the respective second element, so as to allow high precision of assembly.

The use of a single tape of elastomeric material also makes it possible to decrease the production costs and to simplify the layout of the production apparatus.

In addition, the arrangement and manipulation of the elements of elastomeric material cut to size in pairs of elements makes it possible to optimize the management of such elements contributing to decreasing the production costs and to simplifying the layout of the production apparatus.

The rubber-coating method made according to the invention also makes it possible to obtain a production cycle time comprised between about 3 s and about 4 s.

The invention as a whole therefore makes it possible to make the rubber-coating electronic components with a high precision of assembly, a reduction of waste of defective rubber-coated electronic components, containment of the production cycle time and a decrease of the costs and of the occupied space of the required apparatus.

## Claims

1. Method for rubber-coating electronic components (13) comprising:
- providing the electronic components (13) to be rubber-coated;
- providing elements of elastomeric material that are already cut to size;
- enclosing the electronic components (13) between respective first elements (11) and second elements (12) of said elements of elastomeric material that are already cut to size, **characterized in that**:
- said first elements (11) of said elements of elastomeric material that are already cut to size are laid, one after the other, on a tape of service material (310);
- the electronic components (13) are positioned, one after the other, on the respective first elements (11), after their laying on the tape of service material (310);
- the second elements (12) of said elements of elastomeric material that are already cut to size are laid, one after the other, over the respective first elements (11) so as to cover the respective electronic components (13) positioned on them.

2. Method according to claim 1, comprising the provision of a single tape (110) of said elastomeric material, and cutting said single tape (110) so as to obtain said elements of elastomeric material that are already cut to size.

3. Method according to any one of the preceding claims, comprising a first control adapted to verify a correct operation of each electronic component (13) according to predetermined specifications before having enclosed the electronic component (13) between the respective first element (11) and second element (12); wherein, if in the first control the predetermined specifications are not met, the electronic component (13) is discarded without being enclosed between the respective first element (11) and second element (12).

4. Method according to any one of the preceding claims, comprising a second control adapted to verify a correct operation of each electronic component (13) according to predetermined specifications after having enclosed the electronic component (13) between the respective first element (11) and second element (12); wherein, if in the second control the predetermined specifications are not met, the electronic component (13) enclosed between the respective first element (11) and second element (12) is discarded.

5. Method according to any one of the preceding claims, wherein, before enclosing each electronic component (13) between the respective first element (11) and second element (12), it is provided to verify that the respective first element (11) and second element (12) are of shape and size falling within predetermined reference values; wherein if at least one among said shape and size does not fall within the predetermined reference values, said respective first element (11) and second element (12) are discarded.

6. Method according to any one of the preceding claims, wherein said elements of elastomeric material that are already cut to size are arranged in pairs (16), each pair (16) comprising a respective first element (11) of said first elements (11) and a respective second element (12) of said second elements (12), and wherein the laying over the tape of service material (310) of said first elements (11) and second elements (12) is carried out by laying said pairs (16) one after the other, over the tape of service material (310); wherein the first element (11) of each current pair (16) of said pairs (16), currently laid over the tape of service material (310), is laid directly on the tape of service material (310) whereas the second element (12) of each current pair (16) is laid over the first element (11) of a previous pair (16) of said pairs (16), previously laid over the tape of service material (310).

7. Method according to any one of the preceding claims, wherein:
- before the positioning of each electronic component (13) on the respective first element (11), the positioning of the respective first element (11) on the tape of service material (310) is checked;
- the positioning of each electronic component (13) on the respective first element (11) is carried out by taking into account the result of said positioning verification of the respective first element (11); and
- the laying of each second element (12) over the respective first element (11) is carried out by taking into account the result of said positioning check of the respective first element (11).

8. Method according to any one of the preceding claims 6 to 7, wherein, in an initial phase of the method:
- before laying the pairs (16) of said elements of elastomeric material one after the other over the tape of service material (310), a single element (11') of elastomeric material cut to size, on which a respective electronic component (13) is positioned, is laid on the tape of service material (310) and, at the subsequent laying of a first pair of said pairs (16), the second element (12) of such a first pair is laid over said single element (11') of elastomeric material so as to cover the respective electronic component (13) previously positioned on said single element (11') of elastomeric material; or
- the second element (12) of a first pair of said pairs (16), which is laid over the tape of service material (310), is laid directly on the tape of service material (310).

9. Apparatus (1) for producing rubber-coated electronic components (10), comprising:
- a first working line (100) configured to feed elements of elastomeric material cut to size;
- a second working line (200) configured to feed electronic components (13);
- a first moving device (400);
- a second moving device (500);
**characterized in that** said first moving device (400) is configured to pick up and move first elements (11) and second elements (12) of said elements of elastomeric material cut to size from the first working line (100) so as to enclose electronic components (13) picked up and moved through said second moving device (500) from the second working line (200) between respective first elements (11) and second elements (12).

10. Apparatus according to claim 9, comprising a third working line (300) configured to feed a tape of service material (310), wherein said first elements (11) and said second elements (12) enclose said electronic components (13) over said tape of service material (310); and wherein:
- said first moving device (400) is configured to pick up said first elements (11), one after the other, and lay them, one after the other, on the tape of service material (310);
- said second moving device (500) is configured to pick up the electronic components (13), one after the other, and, respectively, position them, one after the other, on said first elements (11) laid on the tape of service material (310);
wherein the first moving device (400) is configured to pick up said second elements (12), one after the other, and, respectively, lay them, one after the other, over said first elements (11) so as to cover the respective electronic components (13) positioned on them by the second moving device (500).

11. Apparatus (1) according to claim 10, wherein the third working line (300) comprises an image acquisition device (350) adapted to verify the positioning on said tape of service material (310) of each element of said first elements (11) of said elements of elastomeric material cut to size.

12. Apparatus according to any one of the preceding claims 9 to 11, wherein the first working line (100) comprises a single tape (110) of said elastomeric material and a cutting unit (130) configured to cut said single tape (110) of said elastomeric material so as to obtain said elements of elastomeric material cut to size.

13. Apparatus according to any one of the preceding claims 10 to 12, wherein the first working line (100) is configured to feed said elements of elastomeric material cut to size by feeding pairs (16) of said elements of elastomeric material cut to size one after the other, each pair comprising a respective first element of said first elements (11) and a respective second element of said second elements (12), and wherein the first moving device (400) is configured to carry out the picking up from the first working line (100) and the laying over the tape of service material (310) of said first elements (11) and second elements (12) by picking up and laying said pairs (16) of said elements of elastomeric material cut to size one after the other.

14. Apparatus according to claim 13, wherein the first moving device (400) is configured to directly lay the first element (11) of each current pair (16) of said pairs (16), currently laid over the tape of service material (310), on the tape of service material (310), and to lay the second element (12) of each current pair (16) over the first element (11) of a previous pair (16) of said pairs (16), previously laid over the tape of service material (310).

## Patentansprüche

1. Verfahren zum Gummibeschichten elektronischer Komponenten (13), umfassend:
- Bereitstellen der mit Gummi zu beschichtenden elektronischen Komponenten (13);
- Bereitstellen von Elementen aus Elastomermaterial, die bereits auf Größe geschnitten sind;
- Einschließen der elektronischen Komponenten (13) zwischen jeweiligen ersten Elementen (11) und zweiten Elementen (12) der Elemente aus Elastomermaterial, die bereits auf Größe geschnitten sind,
**dadurch gekennzeichnet, dass:**
- die ersten Elemente (11) von Elementen aus Elastomermaterial, die bereits auf Größe geschnitten sind, nacheinander auf ein Band aus Servicematerial (310) gelegt werden;
- die elektronischen Komponenten (13) nacheinander auf den jeweiligen ersten Elementen (11) positioniert werden, nachdem sie auf das Band aus Servicematerial (310) aufgelegt wurden;
- die zweiten Elemente (12) der Elemente aus Elastomermaterial, die bereits auf Größe geschnitten sind, nacheinander über die jeweiligen ersten Elemente (11) gelegt werden, um die jeweiligen darauf positionierten elektronischen Komponenten (13) zu bedecken.

2. Verfahren nach Anspruch 1, umfassend die Bereitstellung eines einzelnen Bands (110) aus dem Elastomermaterial und das Schneiden des einzelnen Bands (110), um die Elemente aus Elastomermaterial zu erhalten, die bereits auf Größe geschnitten sind.

3. Verfahren nach einem der vorstehenden Ansprüche, umfassend eine erste Kontrolle, die ausgelegt ist, um einen ordnungsgemäßen Betrieb jeder elektronischen Komponente (13) gemäß vorbestimmten Spezifikationen zu überprüfen, bevor die elektronische Komponente (13) zwischen dem jeweiligen ersten Element (11) und zweiten Element (12) eingeschlossen wurde; wobei, falls bei der ersten Kontrolle die vorbestimmten Spezifikationen nicht erfüllt werden, die elektronische Komponente (13) verworfen wird, ohne zwischen dem jeweiligen ersten Element (11) und zweiten Element (12) eingeschlossen zu werden.

4. Verfahren nach einem der vorstehenden Ansprüche, umfassend eine zweite Kontrolle, die ausgelegt ist, um einen ordnungsgemäßen Betrieb jeder elektronischen Komponente (13) gemäß vorbestimmten Spezifikationen zu überprüfen, nachdem die elektronische Komponente (13) zwischen dem jeweiligen ersten Element (11) und zweiten Element (12) eingeschlossen wurde; wobei, falls bei der zweiten Kontrolle die vorbestimmten Spezifikationen nicht erfüllt werden, die zwischen dem jeweiligen ersten Element (11) und zweiten Element (12) eingeschlossene elektronische Komponente (13) verworfen wird.

5. Verfahren nach einem der vorstehenden Ansprüche, wobei vor dem Einschließen jeder elektronischen Komponente (13) zwischen dem jeweiligen ersten Element (11) und zweiten Element (12) bereitgestellt ist, zu überprüfen, dass das jeweilige erste Element (11) und zweite Element (12) von einer Form und Größe sind, die in vorbestimmte Referenzwerte fallen; wobei, wenn mindestens eines von der Form und Größe nicht in die vorbestimmten Referenzwerte fällt, das jeweilige erste Element (11) und zweite Element (12) verworfen werden.

6. Verfahren nach einem der vorstehenden Ansprüche, wobei die bereits auf Größe geschnittenen Elemente aus Elastomermaterial in Paaren (16) angeordnet sind, wobei jedes Paar (16) ein jeweiliges erstes Element (11) der ersten Elemente (11) und ein jeweiliges zweites Element (12) der zweiten Elemente (12) umfasst, und wobei das Auflegen der ersten Elemente (11) und zweiten Elemente (12) über das Band aus Servicematerial (310) durch Auflegen der Paare (16) nacheinander über das Band aus Servicematerial (310) durchgeführt wird; wobei das erste Element (11) jedes aktuellen Paars (16) der Paare (16), das aktuell über das Band aus Servicematerial (310) gelegt ist, direkt auf das Band aus Servicematerial (310) gelegt ist, wohingegen das zweite Element (12) jedes aktuellen Paars (16) über das erste Element (11) eines vorherigen Paars (16) der Paare (16) gelegt ist, das zuvor über das Band aus Servicematerial (310) gelegt wurde.

7. Verfahren nach einem der vorstehenden Ansprüche, wobei:
- vor der Positionierung jeder elektronischen Komponente (13) auf dem jeweiligen ersten Element (11) die Positionierung des jeweiligen ersten Elements (11) auf dem Band aus Servicematerial (310) überprüft wird;
- die Positionierung jeder elektronischen Komponente (13) auf dem jeweiligen ersten Element (11) unter Berücksichtigung des Ergebnisses der Positionierungsüberprüfung des jeweiligen ersten Elements (11) durchgeführt wird; und
- das Auflegen jedes zweiten Elements (12) über das jeweilige erste Element (11) unter Berücksichtigung des Ergebnisses der Positionsprüfung des jeweiligen ersten Elements (11) durchgeführt wird.

8. Verfahren nach einem der vorstehenden Ansprüche 6 bis 7, wobei in einer Anfangsphase des Verfahrens:
- vor dem Auflegen der Paare (16) der Elemente aus Elastomermaterial eines nach dem anderen über das Band aus Servicematerial (310), ein einzelnes Element (11') aus Elastomermaterial, das auf Größe geschnitten ist, auf dem eine jeweilige elektronische Komponente (13) positioniert ist, auf das Band aus Servicematerial (310) gelegt wird und beim nachfolgenden Auflegen eines ersten Paars der Paare (16) das zweite Element (12) eines solchen ersten Paars über das einzelne Element (11') aus Elastomermaterial gelegt wird, um die jeweilige elektronische Komponente (13) zu bedecken, die zuvor auf dem einzelnen Element (11') aus Elastomermaterial positioniert wurde; oder
- das zweite Element (12) eines ersten Paars der Paare (16), das über das Band aus Servicematerial (310) gelegt wird, direkt auf das Band aus Servicematerial (310) gelegt wird.

9. Einrichtung (1) zum Herstellen gummibeschichteter elektronischer Komponenten (10), umfassend:
- eine erste Arbeitslinie (100), die konfiguriert ist, um auf Größe geschnittene Elemente aus Elastomermaterial zuzuführen;
- eine zweite Arbeitslinie (200), die konfiguriert ist, um elektronische Komponenten (13) zuzuführen;
- eine erste Bewegungsvorrichtung (400);
- eine zweite Bewegungsvorrichtung (500);
**dadurch gekennzeichnet, dass** die erste Bewegungsvorrichtung (400) konfiguriert ist, um erste Elemente (11) und zweite Elemente (12) der auf Größe geschnittenen Elemente aus Elastomermaterial von der ersten Arbeitslinie (100) aufzunehmen und zu bewegen, um elektronische Komponenten (13), die durch die zweite Bewegungsvorrichtung (500) von der zweiten Arbeitslinie (200) aufgenommen und bewegt werden, zwischen entsprechenden ersten Elementen (11) und zweiten Elementen (12) einzuschließen.

10. Einrichtung nach Anspruch 9, umfassend eine dritte Arbeitslinie (300), die konfiguriert ist, um ein Band aus Servicematerial (310) zuzuführen, wobei die ersten Elemente (11) und die zweiten Elemente (12) die elektronischen Komponenten (13) über dem Band aus Servicematerial (310) einschließen; und wobei:
- die erste Bewegungsvorrichtung (400) konfiguriert ist, um die ersten Elemente (11) nacheinander aufzunehmen und sie nacheinander auf das Band aus Servicematerial (310) zu legen;
- die zweite Bewegungsvorrichtung (500) konfiguriert ist, um die elektronischen Komponenten (13) nacheinander aufzunehmen und diese jeweils nacheinander auf den ersten Elementen (11) zu positionieren, die auf dem Band aus Servicematerial (310) angeordnet sind;
wobei die erste Bewegungsvorrichtung (400) konfiguriert ist, um zweite Elemente (12) nacheinander aufzunehmen und sie jeweils nacheinander über erste Elemente (11) zu legen, um die jeweiligen darauf positionierten elektronischen Komponenten (13) durch die zweite Bewegungsvorrichtung (500) abzudecken.

11. Einrichtung (1) nach Anspruch 10, wobei die dritte Arbeitslinie (300) eine Bilderfassungsvorrichtung (350) umfasst, die ausgelegt ist, um die Positionierung auf dem Band aus Servicematerial (310) jedes Elements der ersten Elemente (11) der auf Größe geschnittenen Elemente aus Elastomermaterial zu überprüfen.

12. Vorrichtung nach einem der vorstehenden Ansprüche 9 bis 11, wobei die erste Arbeitslinie (100) ein einzelnes Band (110) aus dem Elastomermaterial und eine Schneideeinheit (130) umfasst, die konfiguriert ist, um das einzelne Band (110) aus dem Elastomermaterial zu schneiden, um die Elemente aus Elastomermaterial auf Größe geschnitten zu erhalten.

13. Einrichtung nach einem der vorstehenden Ansprüche 10 bis 12, wobei die erste Arbeitslinie (100) konfiguriert ist, um die auf Größe geschnittenen Elemente aus Elastomermaterial durch Zuführen von Paaren (16) der auf Größe geschnittenen Elemente aus Elastomermaterial nacheinander zuzuführen, wobei jedes Paar ein jeweiliges erstes Element der ersten Elemente (11) und ein jeweiliges zweites Element der zweiten Elemente (12) umfasst, und wobei die erste Bewegungsvorrichtung (400) konfiguriert ist, um das Aufnehmen von der ersten Arbeitslinie (100) und das Auflegen über das Band aus Servicematerial (310) der ersten Elemente (11) und zweiten Elemente (12) durch Aufnehmen und Auflegen der Paare (16) der auf Größe geschnittenen Elemente aus Elastomermaterial nacheinander auszuführen.

14. Einrichtung nach Anspruch 13, wobei die erste Bewegungsvorrichtung (400) konfiguriert ist, um das erste Element (11) jedes aktuellen Paars (16) der Paare (16), das aktuell über das Band aus Servicematerial (310) gelegt wird, direkt auf das Band aus Servicematerial (310) zu legen, und das zweite Element (12) jedes aktuellen Paars (16) über das erste Element (11) eines vorherigen Paars (16) der Paare (16) zu legen, das zuvor über das Band aus Servicematerial (310) gelegt wurde.

## Revendications

1. Procédé pour revêtir de caoutchouc des composants électroniques (13) comprenant :
- la fourniture des composants électroniques (13) à revêtir de caoutchouc ;
- la fourniture d'éléments de matériau élastomère qui sont déjà découpés aux dimensions voulues ;
- l'enfermement des composants électroniques (13) entre de premiers éléments (11) et de seconds éléments (12) respectifs desdits éléments de matériau élastomère qui sont déjà découpés aux dimensions voulues, **caractérisé en ce que** :
- lesdits premiers éléments (11) desdits éléments de matériau élastomère qui sont déjà découpés aux dimensions voulues sont déposés, les uns après les autres, sur une bande de matériau de service (310) ;
- les composants électroniques (13) sont positionnés, les uns après les autres, sur les premiers éléments (11) respectifs, après leur dépose sur la bande de matériau de service (310) ;
- les seconds éléments (12) desdits éléments de matériau élastomère qui sont déjà découpés aux dimensions voulues sont déposés, les uns après les autres, sur les premiers éléments (11) respectifs de manière à recouvrir les composants électroniques respectifs (13) positionnés sur eux.

2. Procédé selon la revendication 1, comprenant la fourniture d'une bande unique (110) dudit matériau élastomère, et la découpe de ladite bande unique (110) de manière à obtenir lesdits éléments de matériau élastomère qui sont déjà découpés aux dimensions voulues.

3. Procédé selon l'une quelconque des revendications précédentes, comprenant une première commande adaptée à vérifier un fonctionnement correct de chaque composant électronique (13) selon des spécifications prédéterminées avant d'avoir enfermé le composant électronique (13) entre le premier élément (11) et le second élément (12) respectifs ; dans lequel, si lors de la première commande, les spécifications prédéterminées ne sont pas satisfaites, le composant électronique (13) est rejeté sans être enfermé entre le premier élément (11) et le second élément (12) respectifs.

4. Procédé selon l'une quelconque des revendications précédentes, comprenant une seconde commande adaptée à vérifier un fonctionnement correct de chaque composant électronique (13) selon des spécifications prédéterminées après avoir enfermé le composant électronique (13) entre le premier élément (11) et le second élément (12) respectifs ; dans lequel, si lors de la seconde commande les spécifications prédéterminées ne sont pas satisfaites, le composant électronique (13) enfermé entre le premier élément (11) et le second élément (12) respectifs est rejeté.

5. Procédé selon l'une quelconque des revendications précédentes, dans lequel, avant d'enfermer chaque composant électronique (13) entre le premier élément (11) et le second élément (12) respectifs, il est prévu de vérifier que le premier élément (11) et le second élément (12) respectifs ont une forme et une taille conformes à des valeurs de référence prédéterminées ; dans lequel si au moins l'une parmi lesdites forme et taille n'est pas conforme aux valeurs de référence prédéterminées, lesdits premier élément (11) et second élément (12) respectifs sont rejetés.

6. Procédé selon l'une quelconque des revendications précédentes, dans lequel lesdits éléments de matériau élastomère qui sont déjà découpés aux dimensions voulues sont agencés par paires (16), chaque paire (16) comprenant un premier élément (11) respectif desdits premiers éléments (11) et un second élément (12) respectif desdits seconds éléments (12), et dans lequel la dépose au-dessus de la bande de matériau de service (310) desdits premiers éléments (11) et seconds éléments (12) est effectuée en déposant lesdites paires (16) les unes après les autres, au-dessus de la bande de matériau de service (310) ; dans lequel le premier élément (11) de chaque paire actuelle (16) desdites paires (16), actuellement déposé au-dessus de la bande de matériau de service (310), est déposé directement sur la bande de matériau de service (310) tandis que le second élément (12) de chaque paire actuelle (16) est déposé au-dessus du premier élément (11) d'une paire précédente (16) desdites paires (16), précédemment déposé au-dessus de la bande de matériau de service (310).

7. Procédé selon l'une quelconque des revendications précédentes, dans lequel :
- avant le positionnement de chaque composant électronique (13) sur le premier élément (11) respectif, le positionnement du premier élément (11) respectif sur la bande de matériau de service (310) est vérifié ;
- le positionnement de chaque composant électronique (13) sur le premier élément (11) respectif est effectué en tenant compte du résultat de ladite vérification de positionnement du premier élément (11) respectif ; et
- la dépose de chaque second élément (12) au-dessus du premier élément (11) respectif est réalisée en tenant compte du résultat de ladite vérification de positionnement du premier élément (11) respectif.

8. Procédé selon l'une quelconque des revendications précédentes 6 à 7, dans lequel, dans une phase initiale du procédé :
- avant la dépose des paires (16) desdits éléments de matériau élastomère les unes après les autres au-dessus de la bande de matériau de service (310), un élément unique (11') de matériau élastomère découpé aux dimensions voulues, sur lequel un composant électronique respectif (13) est positionné, est déposé sur la bande de matériau de service (310) et, lors de la dépose subséquente d'une première paire desdites paires (16), le second élément (12) d'une telle première paire est déposé au-dessus dudit élément unique (11') de matériau élastomère de manière à recouvrir le composant électronique respectif (13) précédemment positionné sur ledit élément unique (11') de matériau élastomère ; ou
- le second élément (12) d'une première paire desdites paires (16), qui est déposé au-dessus de la bande de matériau de service (310), est déposé directement sur la bande de matériau de service (310).

9. Appareil (1) permettant de produire des composants électroniques revêtus de caoutchouc (10), comprenant :
- une première ligne de travail (100) conçue pour amener des éléments de matériau élastomère découpés aux dimensions voulues ;
- une deuxième ligne de travail (200) conçue pour amener des composants électroniques (13) ;
- un premier dispositif de déplacement (400) ;
- un second dispositif de déplacement (500) ;
**caractérisé en ce que** ledit premier dispositif de déplacement (400) est conçu pour collecter et déplacer de premiers éléments (11) et de seconds éléments (12) desdits éléments de matériau élastomère découpés aux dimensions voulues à partir de la première ligne de travail (100) de manière à enfermer des composants électroniques (13) collectés et déplacés à travers ledit second dispositif de déplacement (500) à partir de la deuxième ligne de travail (200) entre de premiers éléments (11) et de seconds éléments (12) respectifs.

10. Appareil selon la revendication 9, comprenant une troisième ligne de travail (300) conçue amener une bande de matériau de service (310), dans lequel lesdits premiers éléments (11) et lesdits seconds éléments (12) enferment lesdits composants électroniques (13) au-dessus de ladite bande de matériau de service (310) ; et dans lequel :
- ledit premier dispositif de déplacement (400) est conçu pour collecter lesdits premiers éléments (11), les uns après les autres, et les déposer, les uns après les autres, sur la bande de matériau de service (310) ;
- ledit second dispositif de déplacement (500) est conçu pour collecter les composants électroniques (13), les uns après les autres, et, respectivement, les positionner, les uns après les autres, sur lesdits premiers éléments (11) déposés sur la bande de matériau de service (310) ;
dans lequel le premier dispositif de déplacement (400) est conçu pour collecter lesdits seconds éléments (12), les uns après les autres, et, respectivement, les déposer, les uns après les autres, au-dessus desdits premiers éléments (11) de manière à recouvrir les composants électroniques respectifs (13) positionnés sur eux par le second dispositif de déplacement (500).

11. Appareil (1) selon la revendication 10, dans lequel la troisième ligne de travail (300) comprend un dispositif d'acquisition d'images (350) adapté à vérifier le positionnement sur ladite bande de matériau de service (310) de chaque élément desdits premiers éléments (11) desdits éléments de matériau élastomère découpés aux dimensions voulues.

12. Appareil selon l'une quelconque des revendications 9 à 11 précédentes, dans lequel la première ligne de travail (100) comprend une bande unique (110) dudit matériau élastomère et une unité de découpe (130) conçue pour découper ladite bande unique (110) dudit matériau élastomère de manière à obtenir lesdits éléments de matériau élastomère découpés aux dimensions voulues.

13. Appareil selon l'une quelconque des revendications précédentes 10 à 12, dans lequel la première ligne de travail (100) est conçue pour amener lesdits éléments de matériau élastomère découpés aux dimensions voulues en amenant des paires (16) desdits éléments de matériau élastomère découpés aux dimensions voulues les unes après les autres, chaque paire comprenant un premier élément respectif desdits premiers éléments (11) et un second élément respectif desdits seconds éléments (12), et dans lequel le premier dispositif de déplacement (400) est conçu pour effectuer la collecte à partir de la première ligne de travail (100) et la dépose au-dessus de la bande de matériau de service (310) desdits premiers éléments (11) et seconds éléments (12) en collectant et en déposant lesdites paires (16) desdits éléments de matériau élastomère découpés aux dimensions voulues les unes après les autres.

14. Appareil selon la revendication 13, dans lequel le premier dispositif de déplacement (400) est conçu pour déposer directement le premier élément (11) de chaque paire actuelle (16) desdites paires (16), actuellement déposé au-dessus de la bande de matériau de service (310), sur la bande de matériau de service (310), et pour déposer le second élément (12) de chaque paire actuelle (16) au-dessus du premier élément (11) d'une paire précédente (16) desdites paires (16), précédemment déposé au-dessus de la bande de matériau de service (310).
